# EUROPEAN PATENT APPLICATION

(11) **EP 3 730 836 A1**
(43) Date of publication of application: **28.10.2020**
(21) Application number: 19171042.5
(22) Date of filing: 25.04.2019
(51) Int. Cl.: F21S 41/663, B60Q 1/14, F21S 41/64, F21S 41/675, F21S 41/153

(54) **METHOD FOR PROVIDING A LIGHT PATTERN, AUTOMOTIVE LIGHTING DEVICE AND AUTOMOTIVE LIGHTING ASSEMBLY**

(71) Applicant: Valeo Vision, 93012 Bobigny Cedex (FR)
(72) Inventor: ALMEHIO, Yasser, 93012 BOBIGNY Cedex (FR); KANJ, Ali, 93012 BOBIGNY Cedex (FR); EL IDRISSI, Hafid, 93012 BOBIGNY CEDEX (FR)
(74) Representative: Valeo Vision

(57) **Abstract**

The invention provides a method for providing a light pattern by a lighting device (1) with a plurality of light source elements (2, 3). The method comprising the steps of providing a target light pattern (4), assigning a Gaussian or a super Gaussian light distribution to each light source element (2, 3), providing an iteration amplitude value to each Gaussian or super Gaussian light distribution and obtaining an intermediate light pattern (21, 22, 23) which is the sum of the Gaussian or super Gaussian light distributions of each light source element. Iteration steps are repeated until the difference between the intermediate light pattern (21, 22, 23) and the target light pattern (4) is below a predetermined threshold. The invention also provides an automotive lighting device (1) and an automotive lighting assembly.

## Description

### TECHNICAL FIELD

This invention is related to the field of automotive lighting devices, and more particularly, to the way light patterns are managed.

### STATE OF THE ART

Digital lighting devices are being increasingly adopted by car makers for middle and high market products.

These digital lighting devices usually rely on pixelated technologies. Such digital light sources usually comprise a stripe or a matrix of LEDs and an optical system with different lenses behind, which project the light emitted by the LEDs. Even in many cases each lighting device comprises more than one light module, each module in turn comprising a matrix of LED pixels, whereas only one target photometry pattern is accepted to determine the global photometrical behaviour of the headlamp.

For many technical reasons, sometimes each module must have a different pixel resolution. However, at the same time, the light distribution provided by the headlamp must be homogeneous, without feeling that light is decomposed by multiple modules.

This problem has been assumed until now, but a solution therefor is provided.

### SUMMARY OF THE INVENTION

The invention provides an alternative solution for improving the aforementioned photometric problem by a method for providing a light pattern according to claim 1, an automotive lighting device according to claim 9 and an automotive lighting assembly according to claim 11. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method for providing a light pattern by a lighting device with a plurality of light source elements, the method comprising the steps of
a) providing a target light pattern;
b) assigning a Gaussian or a super Gaussian light distribution to each light source element, each Gaussian or super Gaussian light distribution being characterized by a mean value, an amplitude and a sigma value;
c) provide an iteration amplitude value to each Gaussian or super Gaussian light distribution and obtaining an intermediate light pattern which is the sum of the Gaussian or super Gaussian light distributions of each light source element;
d) iterate step c) until the difference between the intermediate light pattern and the target light pattern is below a predetermined threshold.

This method allows the decomposition of a predetermined target light pattern in different sub-patterns, one for each light source element composing the lighting device. Firstly, the method respects the different resolution that every light source element may have, and secondly, it achieves the most homogeneous final photometric profile taking into account the specific features of every light source element.

In some particular embodiments, the difference between the intermediate light pattern and the target light pattern is measured by dividing the target light pattern in pixels, comparing the light intensity of the target light pattern and the light intensity of the intermediate light pattern in each pixel, and then summing the light intensity differences of every pixel, the threshold value being a total difference sum.

This criterion pursues a final resemblance between the target light pattern and the light pattern sum provided by the different light source elements.

In some particular embodiments, the difference between the intermediate light pattern and the target light pattern is measured by dividing the target light pattern in pixels, comparing the light intensity of the target light pattern and the light intensity of the intermediate light pattern in each pixel, and then considering the maximum difference between light intensity differences of every pixel; the threshold value being a maximum difference value.

This criterion pursues a final homogeneity in the light pattern sum provided by the different light source elements.

In some particular embodiments, the light element is a lighting module which comprises solid-state light sources.

A method carried out with lighting modules as light source elements provide a first approach in the decomposition of the device light pattern.

In some particular embodiments, the light element is a solid-state light source.

The method of the invention may be carried out even with a single light module, by the adjustment of the light parameters of each individual solid-state light source.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the life span of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

In some particular embodiments, the method comprises two stages
i) performing steps a) to d) with a lighting module as the light element;
ii) performing steps a) to d) with solid-state light sources as the light elements and the intermediate light pattern of the last step of iteration of stage i) as the target light pattern.

These particular examples of the method according to the invention comprise the repetition of the method: in a first stage, it is carried out to obtain a suitable light pattern in each light module, and then, for each light module, the lighting parameters of each individual pixel is adjusted. As a consequence, a thinner tuning is achieved, and a more approximate result will be obtained.

In some particular embodiments, the step c) also comprises providing an iteration sigma value to each Gaussian or super Gaussian light distribution.

The iteration may be carried out with two variables. It makes this process longer, but may lead to more accurate results.

In some particular embodiments, the method further comprises the step of recording a projection map with the values of amplitude, sigma and mean of each light source element.

Thus, these values may be used several times, without the need of calculating them every time.

In a second inventive aspect, the invention provides an automotive lighting device comprising
a light module with a matrix arrangement of solid-state light sources, intended to provide a light pattern;
a pattern generation tool for performing the steps of the method according to any of the preceding claims.

This lighting device provides the advantageous functionality of a self-provision of the most suitable light pattern for each light source element in the lighting device.

In some particular embodiments, the matrix arrangement comprises at least 2000 solid-state light sources.

A matrix arrangement is a typical example for this method. The rows may be grouped in projecting distance ranges and each column of each group represent an angle interval. This angle value depends on the resolution of the matrix arrangement, which is typically comprised between 0.01º per column and 0.5º per column. As a consequence, the light intensity of each pixel may be adapted if necessary to generate a more accurate pattern.

In a third inventive aspect, the invention provides an automotive lighting assembly comprising
an automotive lighting device; and
an external pattern generation tool for performing the steps of the method according to the first inventive aspect.

This assembly may be used in the manufacturing assembly line of a vehicle, to provide a calculated set of light patterns just out of the line.

### BRIEF LIST OF DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a general perspective view of an automotive lighting device according to the invention.
Figures 2a and 2b represent the first step of a method according to the invention.
Figure 3 represents one intermediate step of a method according to the invention.

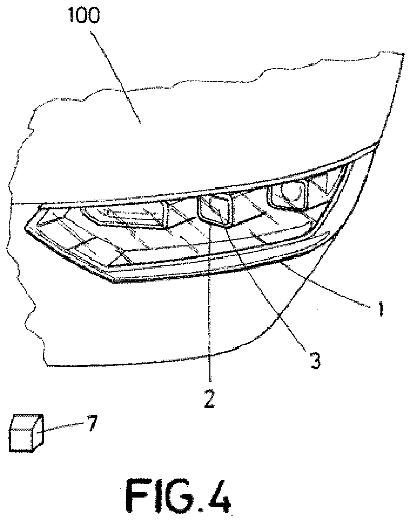

Figure 4 shows an automotive lighting assembly according to the invention.

### REFERENCE NUMBERS

In the aforementioned figures, the following reference numbers have been used:
- 1: Lighting device
- 2: Light module
- 3: LED
- 4: Target light pattern
- 4': Target light pattern over a line
- 6: Pattern generation tool
- 7: External pattern generation element
- 10: Auxiliary line
- 11: Area of first light module
- 12: Area of second light module
- 13: Area of third light module
- 21: Intermediate light pattern of first light module
- 22: Intermediate light pattern of second light module
- 23: Intermediate light pattern of third light module
- 24: Pattern sum
- 100: Automotive vehicle

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

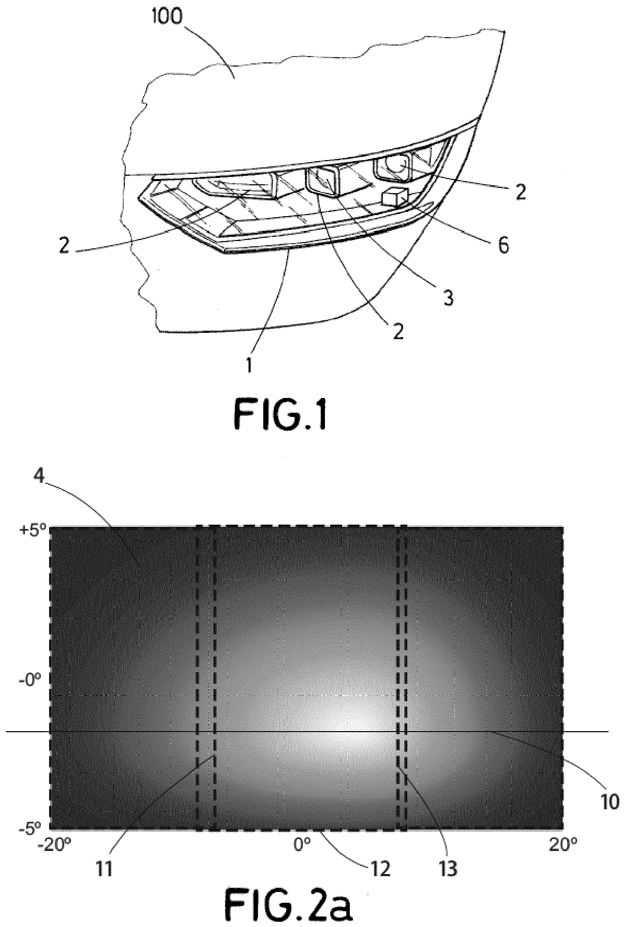

Figure 1 shows a general perspective view of an automotive lighting device according to the invention.

This lighting device 1 is installed in an automotive vehicle 100 and comprises
three light modules 2, each light module comprising a matrix arrangement of LEDs 3, intended to provide a light pattern;
a pattern generation tool 6 to carry out an in-situ calculation of the light pattern that should be provided by each light module 2.

This matrix configuration is a high-resolution module, having a resolution greater than 2000 pixels. However, no restriction is attached to the technology used for producing the projection modules.

A first example of this matrix configuration comprises a monolithic source. This monolithic source comprises a matrix of monolithic electroluminescent elements arranged in several columns by several rows. In a monolithic matrix, the electroluminescent elements can be grown from a common substrate and are electrically connected to be selectively activatable either individually or by a subset of electroluminescent elements. The substrate may be predominantly made of a semiconductor material. The substrate may comprise one or more other materials, for example non-semiconductors (metals and insulators). Thus, each electroluminescent element/group can form a light pixel and can therefore emit light when its/their material is supplied with electricity. The configuration of such a monolithic matrix allows the arrangement of selectively activatable pixels very close to each other, compared to conventional light-emitting diodes intended to be soldered to printed circuit boards. The monolithic matrix may comprise electroluminescent elements whose main dimension of height, measured perpendicularly to the common substrate, is substantially equal to one micrometre.

The monolithic matrix is coupled to the control centre so as to control the generation and/or the projection of a pixelated light beam by the matrix arrangement. The control centre is thus able to individually control the light emission of each pixel of the matrix arrangement.

Alternatively to what has been presented above, the matrix arrangement may comprise a main light source coupled to a matrix of mirrors. Thus, the pixelated light source is formed by the assembly of at least one main light source formed of at least one light emitting diode emitting light and an array of optoelectronic elements, for example a matrix of micro-mirrors, also known by the acronym DMD, for "Digital Micro-mirror Device", which directs the light rays from the main light source by reflection to a projection optical element. Where appropriate, an auxiliary optical element can collect the rays of at least one light source to focus and direct them to the surface of the micro-mirror array.

Each micro-mirror can pivot between two fixed positions, a first position in which the light rays are reflected towards the projection optical element, and a second position in which the light rays are reflected in a different direction from the projection optical element. The two fixed positions are oriented in the same manner for all the micro-mirrors and form, with respect to a reference plane supporting the matrix of micro-mirrors, a characteristic angle of the matrix of micro-mirrors defined in its specifications. Such an angle is generally less than 20° and may be usually about 12°. Thus, each micro-mirror reflecting a part of the light beams which are incident on the matrix of micro-mirrors forms an elementary emitter of the pixelated light source. The actuation and control of the change of position of the mirrors for selectively activating this elementary emitter to emit or not an elementary light beam is controlled by the control centre.

In different embodiments, the matrix arrangement may comprise a scanning laser system wherein a laser light source emits a laser beam towards a scanning element which is configured to explore the surface of a wavelength converter with the laser beam. An image of this surface is captured by the projection optical element.

The exploration of the scanning element may be performed at a speed sufficiently high so that the human eye does not perceive any displacement in the projected image.

The synchronized control of the ignition of the laser source and the scanning movement of the beam makes it possible to generate a matrix of elementary emitters that can be activated selectively at the surface of the wavelength converter element. The scanning means may be a mobile micro-mirror for scanning the surface of the wavelength converter element by reflection of the laser beam. The micro-mirrors mentioned as scanning means are for example MEMS type, for "Micro-Electro-Mechanical Systems". However, the invention is not limited to such a scanning means and can use other kinds of scanning means, such as a series of mirrors arranged on a rotating element, the rotation of the element causing a scanning of the transmission surface by the laser beam.

In another variant, the light source may be complex and include both at least one segment of light elements, such as light emitting diodes, and a surface portion of a monolithic light source.

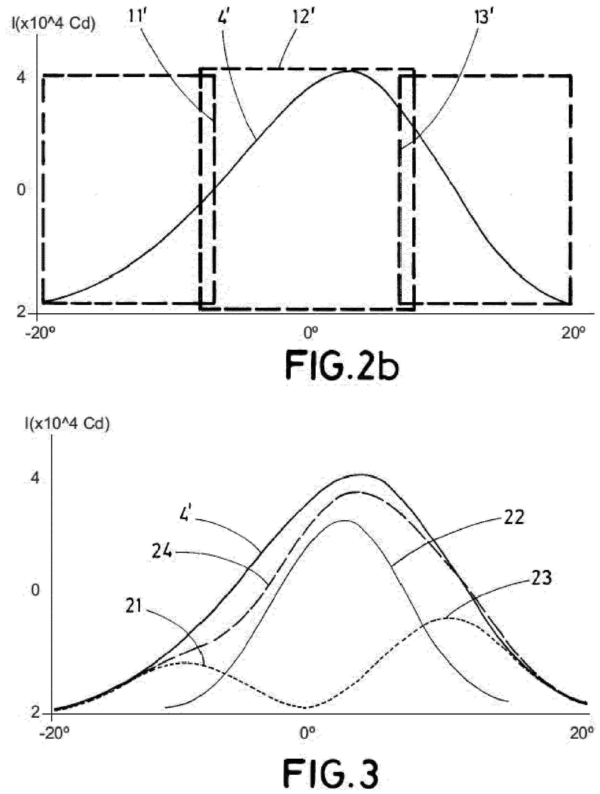

Figure 2a and 2b show a first step of a method according to the invention.

In figure 2a, a bidimensional target light pattern 4 is shown. This target light pattern is a photometric map where light intensity is represented by the different colours of each pixel (lighter colours represent a higher light intensity). This target light pattern 4 is the starting point for the method according to the invention.

Since the lighting device comprises three light modules, three rectangles 11, 12, 13 have been drawn to represent the angular contribution of each light module. There is an overlapping between them, since the arrangement of each light module allows that some angle ranges are covered by more than one light module.

A line 10 has been drawn in a constant y-coordinate to be used in the argumentation of the following figures.

Figure 2b represents the light intensity along the line 10 of previous figure 2a. This light intensity does not adjust to any particular Gaussian or super Gaussian curve. Further, this pattern 4', which represents the value of the light intensity of the light pattern 4 of figure 2a over the line 10, must be achieved by the sum of the light patterns of the three light modules comprised in the lighting device. The equivalent regions of each module are represented by the rectangles 11', 12' and 13'.

After knowing the target light pattern, each light module is simulated to emit a Gaussian light pattern, with a mean value, an amplitude and a sigma value.

The amplitude value is iterated until a validity criterion is satisfied. Many validity criteria may be used. For example, the target light pattern may be divided into pixels, and the light intensity of the target light pattern is compared to the light intensity of the intermediate light pattern in each pixel. Each pixel will provide an error sub-value. Then, all the sub-values are summed. To overcome the criterion, the total sum must be lower than a predetermined value. In another example, only the maximum sub-value is considered, and to overcome the criterion, this maximum value must be lower than a predetermined value.

Figure 3 shows the light profiles of the three lighting modules along the line 10 of figure 2a. The first light module emits a first light profile 21, the second light module emits a second light profile 22 and the third light module emits a third light profile 23. The sum of all these light profiles is a pattern sum 24, which is close to the original target light pattern 4'.

Once each light module has their light pattern according to this first stage of the method, this method is repeated for the light source pixels of each light module.

The light pattern obtained in the first stage becomes the target light pattern for the matrix arrangement. Each pixel is therefore characterized by the amplitude, mean and sigma value (as Gaussian elements). The amplitude and sigma values of each pixel is iterated until a validity criterion is overcome, so that the light pattern provides by the arrangement of pixels is similar to the target light pattern.

Gaussian and super Gaussian distributions are considered as valid approximations of the electroluminescence performance of a pixel.

Once this method is concluded, the amplitude, mean and sigma values of each light source are stored in the PCM, so that in the event a light pattern as the original target light pattern is required, the values are immediately recovered without the need of calculating them again.

Figure 3 shows an automotive lighting assembly according to the invention. In this case, the automotive lighting device 1 is a standard automotive lighting device and there is an external pattern generator element 7 which is suitable for performing some of the steps of the method described above. This makes it possible to use this invention also in standard lighting devices which does not comprise an embedded pattern generator unit, contrary to the one shown in figure 1.

## Claims

1. Method for providing a light pattern by a lighting device (1) with a plurality of light source elements (2, 3), the method comprising the steps of
a) providing a target light pattern (4, 4');
b) assigning a Gaussian or a super Gaussian light distribution to each light source element (2, 3), each Gaussian or super Gaussian light distribution being **characterized by** a mean value, an amplitude and a sigma value;
c) provide an iteration amplitude value to each Gaussian or super Gaussian light distribution and obtaining an intermediate light pattern (21, 22, 23) which is the sum of the Gaussian or super Gaussian light distributions of each light source element;
d) iterate step c) until the difference between the intermediate light pattern (21, 22, 23) and the target light pattern (4, 4') is below a predetermined threshold.

2. Method according to claim 1, wherein the difference between the intermediate light pattern and the target light pattern is measured by dividing the target light pattern in pixels, comparing the light intensity of the target light pattern and the light intensity of the intermediate light pattern in each pixel, and then summing the light intensity differences of every pixel, the threshold value being a total difference sum.

3. Method according to claim 1, wherein the difference between the intermediate light pattern and the target light pattern is measured by dividing the target light pattern in pixels, comparing the light intensity of the target light pattern and the light intensity of the intermediate light pattern in each pixel, and then considering the maximum difference between light intensity differences of every pixel; the threshold value being a maximum difference value.

4. Method according to any of the preceding claims, wherein the light element is a lighting module (2) which comprises solid-state light sources (3).

5. Method according to any of claims 1 to 3, wherein the light element is a solid-state light source (3).

6. Method according to claim 4, wherein the method comprises two stages
i) performing steps a) to d) with a lighting module (2) as the light element;
ii) performing steps a) to d) with solid-state light sources (3) as the light elements and the intermediate light pattern of the last step of iteration of stage i) as the target light pattern.

7. Method according to any of the preceding claims, wherein the step c) also comprises providing an iteration sigma value to each Gaussian or super Gaussian light distribution.

8. Method according to any of the preceding claims, further comprising the step of
e) recording a projection map with the values of amplitude, sigma and mean of each light source element.

9. Automotive lighting device comprising
a light module (2) with a matrix arrangement of solid-state light sources (3), intended to provide a light pattern;
a pattern generation tool (6) for performing the steps of the method according to any of the preceding claims.

10. Automotive lighting device according to claim 9, wherein the matrix arrangement comprises at least 2000 solid-state light sources (3).

11. Automotive lighting assembly comprising
an automotive lighting device (1);
an external pattern generation tool (7) for performing the steps of the method according to any of claims 1 to 8.
